# EUROPEAN PATENT SPECIFICATION

(11) **EP 1 555 253 B1**
(45) Date of publication and mention of the grant of the patent: **16.12.2009**
(21) Application number: 03754209.9
(22) Date of filing: 21.10.2003
(51) Int. Cl.: C04B 38/06, B01D 39/20

(54) **METHOD FOR MANUFACTURING POROUS HONEYCOMB STRUCTURE AND HONEYCOMB BODY**
VERFAHREN ZUR HERSTELLUNG VON PORÖSER WABENSTRUKTUR UND WABENKÖRPER
FABRICATION D'UNE STRUCTURE POREUSE EN NID D'ABEILLE ET CORPS EN NID D'ABEILLE

(30) Priority: 23.10.2002 JP 2002308068
(43) Date of publication of application: 20.07.2005
(73) Proprietor: NGK INSULATORS, LTD., Nagoya-city, Aichi 467-8530 (JP)
(72) Inventor: UCHIDA, Yasushi NGK INSULATORS, LTD., Nagoya-shi, Aichi 467-8530 (JP); OTSUKA, Aiko NGK INSULATORS, LTD., Nagoya-shi, Aichi 467-8530 (JP); ICHIKAWA, Shuichi NGK INSULATORS, LTD., Nagoya-shi, Aichi 467-8530 (JP)
(74) Representative: Paget, Hugh Charles Edward
(86) International application number: PCT/JP2003/013428
(87) International publication number: WO 2004/037744

(56) References cited:
- EP-A- 1 193 233
- EP-A1- 1 170 270
- EP-A1- 1 316 538
- EP-A1- 1 342 494
- EP-A1- 1 374 969
- WO-A-03/051488
- JP-A- 2002 047 069
- JP-A- 2002 301 323
- US-A- 4 777 152
- US-A- 5 521 129
- US-B1- 6 582 796

## Description

### Technical Field

The present invention relates to a method for manufacturing a porous honeycomb structure preferably for use, for example, as a soot collecting filter, and a honeycomb formed body, particularly to a method for manufacturing a porous honeycomb structure, capable of effectively inhibiting a situation in which cracks are generated in a porous honeycomb structure, or a situation in which the porous honeycomb structure collapses by its own weight, when manufacturing a porous honeycomb structure having a high porosity, and a honeycomb formed body.

### Background Art

A porous honeycomb structure composed of a ceramic superior in heat resistance and corrosion resistance has been used as a soot collecting filter for environmental measures such as inhibition of pollution and for product recovery from a high-temperature gas in various fields including chemistry, power, iron and steel, and industrial waste disposal. For example, a porous honeycomb structure formed of a ceramic is preferably used as a soot collecting filter for use under a corrosive gas atmosphere at a high temperature, such as a diesel particulate filter (DPF) which captures particulates discharged from a diesel engine.

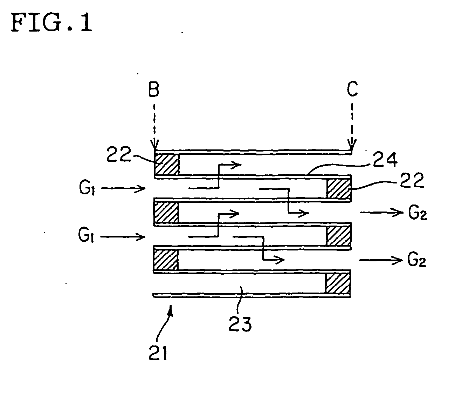

Examples of a soot collecting filter using a porous honeycomb structure include a structure in which, as shown in FIG. 1, inlet-side end faces B and outlet-side end faces C of a plurality of cells 23 of a porous honeycomb structure 21 are alternately plugged by plugging portions 22. According to this porous honeycomb structure, when a gas G₁ to be treated is introduced into the cells 23 from the inlet-side end face B, particulates are captured in partition walls 24. On the other hand, a treated gas G₂ which has flown into the adjacent cell 23 through the porous partition wall 24 is discharged from the outlet-side end face C, it is possible to obtain the treated gas G₂ from which the particulates in the gas G₁ to be treated are separated.

Especially, in recent years, from a necessity of enhancement of a treatment capability of the soot collecting filter, there has been a demand for a porous honeycomb structure having little pressure loss and high porosity among the above-described porous honeycomb structures. As a method for manufacturing the porous honeycomb structure having the high porosity, a method for manufacturing a porous honeycomb structure has been disclosed in which in addition to a cordierite-forming raw material and water, a binder (organic binder such as methyl cellulose), a pore-forming agent (organic material such as graphite) and the like are kneaded, and a raw formable material (synonymous with "clay" mentioned in the present description) having plasticity is formed into a certain shape, dried, and fired (see JP-2002-219319A). According to the manufacturing method, when the formed body is fired, the binder and the pore-forming agent have burnt down to form pores, and therefore the porous honeycomb structure having high porosity can be obtained.

However, in a case where large amounts of binder and pore-forming agent are contained in the clay for a purpose of manufacturing a porous honeycomb structure having a higher porosity in the above-described manufacturing method, when the formed body is fired, there has been a problem that cracks are generated in the porous honeycomb structure, or a situation in which the porous honeycomb structure collapses by its own weight in an extreme case.

### Disclosure of the Invention

The present invention has been developed in view of the above-described problem of the conventional technique, and aims at providing a method for manufacturing a porous honeycomb structure capable of effectively inhibiting a situation in which cracks are generated in the porous honeycomb structure, or a situation in which the porous honeycomb structure collapses by its own weight, and a honeycomb formed body.

As a result of intensive researches for addressing the above-described problem, the present inventor has found that the above-described problem can be addressed by having an alkali metal source in clay to be formed, and has completed the present invention. That is, according to the present invention, there are provided the method for manufacturing a porous honeycomb structure as set out in claim 1, and a honeycomb formed body, as set out in claim 3. Preferably the aggregate raw material contains at least one component selected from the group consisting of silicon carbide, silicon nitride, and metal silicon; and the total mass of the component(s) is 50% by mass or more of a total mass of the aggregate raw material.

### Brief Description of the Drawings

FIG. 1 is a schematic diagram showing an example of a soot collecting filter using a porous honeycomb structure;
FIG. 2 is a schematic diagram showing a "honeycomb" in accordance with an example of the porous honeycomb structure; and
FIG. 3 is a schematic diagram showing a method for evaluating strength of a calcinated body.

### Best Mode for Carrying out the Invention

An embodiment for carrying out a method for manufacturing a porous honeycomb structure of the present invention will be specifically described.

The present inventor has studied reasons why cracks are generated in a porous honeycomb structure, or a porous honeycomb structure collapses by its own weight in a case where a formed body is first fired, when developing the method for manufacturing the porous honeycomb structure of the present invention. As a result, a first reason has been considered that large amounts of binder and pore-forming agent burn and generate heat in a case where the formed body is fired, accordingly temperature of the formed body being fired rapidly rises, and a large heat stress is generated. As a second reason, it has been considered that the binder contained in the clay becomes a gel in the formed body before firing, and exerts a function of a reinforcing agent to maintain mechanical strength of the formed body, but a phenomenon occurs in which the binder that has functioned as the reinforcing agent burns out, and the mechanical strength of the formed body rapidly drops during firing in a case where the formed body is fired. Moreover, as a third reason, it has been considered that this phenomenon has become more remarkable in a highly porous structure after the pore-forming agent has burnt out.

To address the problem, in the present invention, a material which functions as the reinforcing agent is separately added to clay to be formed, even after the binder burns out. Specifically, an alkali metal source is contained in the clay to be formed, the alkali metal source being potassium hydroxide or sodium hydroxide.

When the alkali metal source is dissolved in a water content in the clay, the hydroxide reacts with silica unavoidably existing on the surface of a non-oxide ceramic containing silicon to form alkali silicate glass (water glass) (see the following reaction formula (1)). This alkali silicate glass functions as the reinforcing agent even after the binder has burnt out, and the drop of the mechanical strength of the formed body (i.e., porous honeycomb structure) can be inhibited. Therefore, even in a case where the large amounts of the binder and pore-forming agent burn to generate heat, accordingly the temperature of the formed body being fired rapidly rises, and a large heat stress is generated, it is possible to effectively inhibit a situation in which the cracks are generated in the porous honeycomb structure. Even in a high-porosity structure after the pore-forming agent has burnt out, it is possible to effectively inhibit the situation in which the porous honeycomb structure collapses by its own weight.

2KOH+SiO₂ → K₂O·SiO₂+H₂O (1)

### (i) First Step (Preparation of Clay)

In the manufacturing method of the present invention, first at least an aggregate raw material, water, an organic binder, a pore-forming agent, and an alkali metal source are mixed, and kneaded to obtain clay, in which the aggregate raw material comprises metal silicon and/or a non-oxide ceramic containing silicon.

The aggregate is particles constituting a main component of a porous honeycomb structure (sintered body), and the aggregate raw material is a raw material of the aggregate. The aggregate raw material in the present invention needs to contain the "silicon-containing" non-oxide ceramic and/or metal "silicon" as an essential component. In the present invention, it is necessary that the aggregate contains a silica source which can react with an alkali metal to form alkali silicate glass. In the present invention, the above-described silica source preferably exists in the form of a surface oxide film of the aggregate, and a material having such a structure is the "silicon-containing" non-oxide ceramic or metal "silicon". It is to be noted that metal silicon is not a ceramic, but is, for example, a constituting material of an Si-SiC sintered body containing silicon carbide and metal silicon as the aggregate raw material.

In the manufacturing method of the present invention, the aggregate raw material needs to contain the silicon-containing non-oxide ceramic and/or metal silicon as essential components. The material especially preferably contains at least one component selected from the group consisting of silicon carbide, silicon nitride, and metal silicon, and a total mass of the component(s) preferably corresponds to 50% by mass or more with respect to a total mass of the aggregate raw material. In other words, the aggregate raw material of the present invention may contain components other than the silicon-containing non-oxide ceramic and metal silicon, and a content is preferably less than 50 mass% with respect to the total mass of the aggregate raw material.

The organic binder is an additive which is gelled in the formed body (clay) before fired and which performs a function of a reinforcing agent to maintain the mechanical strength of the formed body. Therefore, as the binder, organic polymers capable of being gelled in the formed body (clay) such as hydroxypropoxyl methyl cellulose, hydroxypropyl methyl cellulose, methyl cellulose, hydroxyethyl cellulose, carboxyl methyl cellulose, polyvinyl alcohol and the like are preferably usable.

The pore-forming agent is an additive which burns out to form pores in a case where the formed body is fired, accordingly porosity is increased, and the porous honeycomb structure having high porosity is obtained. Therefore, examples of the pore-forming agent include organic materials which burn out in a case where the formed body is fired, such as graphite, flour, starch, phenol resin, poly(methylmethacrylate), polyethylene, and polyethylene terephthalate. Above all, a microcapsule (acrylic resin-based microcapsule, etc.) formed of a foamed resin is especially preferably usable. The microcapsule formed of the foamed resin is hollow. Therefore, when a small amount of the microcapsule is added, a high-porosity porous honeycomb structure can be obtained. Additionally, there is an advantage that small amount of heat is generated at a firing time, and generation of thermal stress can be reduced.

The alkali metal source is an additive functioning as the reinforcing agent which binds the aggregate particles together even after the binder burns out. When the additive is dissolved in water in the clay, hydroxide is present. The additive reacts with amorphous silica unavoidably existing on the surface of the silicon-containing non-oxide ceramic or the like to form alkali silicate glass, and accordingly the function is developed.

The alkali metal source is potassium hydroxide or sodium hydroxide

As a content of the alkali metal source, the clay to be formed contains 0.01 to 10 parts by mass of the alkali metal source in terms of alkali metal with respect to 100 parts by mass of the aggregate raw material, more preferably contains 0.02 to 5 parts by mass of the alkali metal source, and especially preferably contains 0.03 to 1 part by pass of the alkali metal source.

When the content of the alkali metal source is set within the above-described range, a calcinated body has a strength of at least 0.01 kg/cm² in calcinating and firing steps, and it is possible to effectively inhibit a situation in which cracks are generated in the calcinated body (hereby, also in the porous honeycomb structure), or a situation in which the calcinated body (hereby, also the porous honeycomb structure) collapses by its own weight (it is to be noted that a method for measuring the above-described strength will be described in detail in Examples). On the other hand, when the content of the alkali metal is less than the above-described range, an effect of maintaining the mechanical strength of the calcinated body after the binder burns out is not enough. When the content exceeds above-described range, the effect of maintaining the mechanical strength of the calcinated body is fulfilled. However, the alkali silicate glass formed by the alkali metal fills in pores of the calcinated body (hereby, also in the porous honeycomb structure), and porosity unfavorably drops.

The clay in the present invention needs to contain at least the aggregate raw material, water, organic binder, pore-forming agent, and alkali metal source, but, according to need, an aggregate raw material other than the silicon-containing non-oxide ceramic and metal silicon, or another additive that is not defined as the essential component may be contained. For example, a dispersant for promoting dispersion of raw materials into water which is a dispersion medium, a forming aid for enhancing formability and the like may be contained. Examples of the dispersant include ethylene glycol, dextrin, fatty acid soap, polyalcohol and the like. It is to be noted that when the additive contains the alkali metal, the additive can be the alkali metal source, and therefore the alkali metal source does not have to be separately added. Examples of the additive include potassium laurate for use as the forming aid.

The aggregate raw material, water, organic binder, pore-forming agent, alkali metal source and the like are mixed and kneaded, for example, by a vacuum pug mil or the like, and prepared into clay having appropriate viscosity.

### (ii) Second Step (Forming and Drying)

Next, the clay prepared as described above is formed into a honeycomb shape having a plurality of cells which are passages for fluid, and dried to thereby obtain a honeycomb formed body.

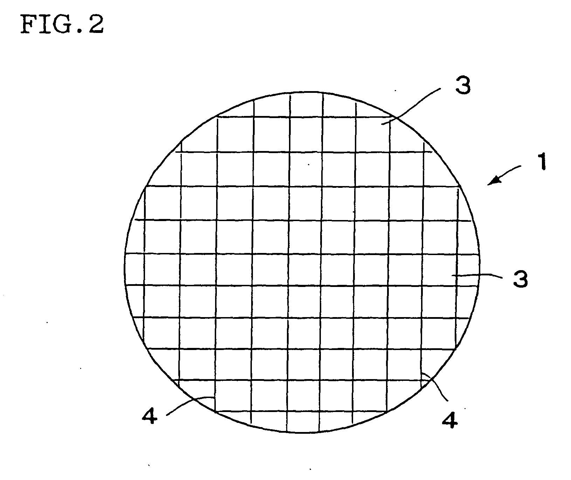

The "honeycomb" mentioned in the present description means a shape, for example, a shape of a porous honeycomb structure 1 shown in FIG. 2, which is partitioned by remarkably thin partition walls 4 to form a plurality of cells 3 which are passages for fluid. A whole shape of the honeycomb formed body is not especially limited, and examples include a cylindrical shape shown in FIG. 2, additionally a quadratic prism, a triangular prism and another shape. A cell shape (cell shape in a section vertical to a cell forming direction) of the honeycomb formed body is not especially limited, and examples include a quadrangular cell shown in FIG. 2, additionally a hexagonal cell, a triangular cell and the like.

A method for forming is not especially limited, and known methods in the art such as extrusion, injection, and press are usable. Above all, a method of extruding the clay prepared as described above with a die having a desired cell shape, partition wall thickness, and cell density is preferably used. A method for drying is not especially limited, and known methods in the art such as hot air drying, microwave drying, dielectric drying, reduced pressure drying, vacuum drying, and freeze drying are usable . Above all, a method constituted by combining the hot air drying with the microwave drying or with the dielectric drying is preferable because the whole formed body can be quickly and uniformly dried.

The honeycomb formed body of the present invention obtained as described above comprises clay containing at least an aggregate raw material composed of metal silicon and/or a non-oxide ceramic containing silicon, water, an organic binder, a pore-forming agent, and an alkali metal source, the honeycomb formed body being formed into a honeycomb shape having a plurality of cells as passages for fluid. When the formed body is fired, an effect of effectively inhibiting a situation in which cracks are generated in a porous honeycomb structure, or a situation in which the porous honeycomb structure collapses by its own weight is fulfilled. Especially, when the clay contains 0.1 to 10 parts by mass of the alkali metal source in terms of alkali metal with respect to 100 parts by mass of the aggregate raw material, the effect becomes greater.

### (iii) Third Step (Calcinating)

Furthermore, the honeycomb formed body obtained as described above is calcinated (degreased) to form a calcinated body. The calcinating means an operation of burning organic materials (binder, pore-forming agent, dispersant, etc.) in the formed body to remove the organic materials. In general, since burning temperature of the binder is about 160 degrees C, and that of the pore-forming agent is about 300 degrees C, calcinating temperature may be set to about 200 to 1000 degrees C. A calcinating time is not especially limited, and is usually about one to ten hours.

### (iv) Fourth Step (Firing)

Finally, the calcinated body obtained as described above is fired to thereby obtain a porous honeycomb structure. The firing is an operation of sintering and densifying the aggregate raw material in the calcinated body to secure a certain strength. Since firing conditions (temperature and time) differ with a type of the aggregate raw material, appropriate conditions may be selected in accordance with the type of the aggregate raw material for use. For example, when silicon carbide is used as the aggregate raw material, the material is preferably fired at temperature of 1300 to 2300 degrees C for one to five hours.

### (Examples)

The present invention will be described hereinafter further specifically in accordance with examples in which a porous honeycomb structure having a high porosity of 60% was manufactured, and comparative examples. However, the present invention is not restricted to the Examples. It is to be noted that as to average particle diameters of aggregate raw materials in the following examples and comparative examples, a value of 50% particle diameter measured by an X-ray transmission type particle size distribution analyzer (e.g., Sedigraph 5000-02 manufactured by Shimadzu Corp.) which determines a particle size distribution by X-ray transmission using a Stokes liquid-phase sedimentation process as a measurement principle was used.

Examples 3, 4 and 6 are examples of the invention. Examples 1, 2, 5 and 7, as well as Comparative Examples 1 to 3 and for comparison.

### [Manufacturing of Honeycomb formed body]

### (Example 1)

As an aggregate raw material, 100 parts by mass in total were prepared including 80 parts by mass of a silicon carbide powder having an average particle diameter of 33.0 µm, and 20 parts by mass of a metal silicon powder having an average particle diameter of 4.0 µm. Moreover, 0.45 parts by mass of potassium laurate (0.07 parts by mass in terms of alkali metal) were added as an alkali metal source to 100 parts by mass of the aggregate raw material. Furthermore, methyl cellulose and hydroxypropyl methyl cellulose were added as organic binders, and starch was added as a pore-forming agent. An appropriate amount of water was added, and the material was mixed and kneaded by a vacuum pug mil to prepare clay.

By extruding the above-described clay using a die having a cell shape, partition wall thickness, and cell density as described later, the clay was formed into a honeycomb shape, and thereafter dried by a combination of hot air drying and microwave drying to obtain a honeycomb formed body. The obtained honeycomb formed body had a square end face (cell opening face) of 35 mmx35 mm and a length of 152 mm as a whole shape. The cell shape was a 1.15 mm×1.15 mm square cell, the partition wall thickness was 310 µm, the cell density was 46.5 cells/cm² (300 cells/square inch), and a total number of cells was 576 cells.

### (Examples 2 to 6)

Honeycomb formed bodies were obtained in the same manner as in Example 1 except that types and adding amounts of an alkali metal source were set to 0.15 parts by mass of potassium laurate (0.02 parts by mass in terms of alkali metal: Example 2), 0.05 parts by mass of potassium hydroxide (0.03 parts by mass in terms of the alkali metal: Example 3), 0.05 parts by mass of sodium hydroxide (0.03 parts by mass in terms of alkali metal: Example 4), 0.9 parts by mass of potassium laurate (0.15 parts by mass in terms of alkali metal: Example 5), and 10 parts by mass of potassium hydroxide (7 parts by mass in terms of the alkali metal: Example 6).

### (Example 7)

As an aggregate raw material, 100 parts by mass of a metal silicon powder having an average particle diameter of 4.0 µm were prepared. Moreover, 0.45 parts by mass of potassium laurate (0.07 parts by mass in terms of alkali metal) were added as an alkali metal source to 100 parts by mass of the aggregate raw material. Furthermore, methyl cellulose and hydroxypropyl methyl cellulose were added as organic binders, and starch was added as a pore-forming agent. An appropriate amount of water was added, and the material was mixed and kneaded by a vacuum pug mil to prepare clay. Thereafter, a honeycomb formed body was obtained in the same manner as in Example 1.

### (Comparative Example 1)

Honeycomb formed bodies were obtained in the same manner as in Example 1 except that an alkali metal source was not added.

### (Comparative Examples 2 and 3)

Honeycomb formed bodies were obtained in the same manner as in Example 1 except that 0.03 parts by mass of potassium laurate (0.005 parts by mass in terms of alkali metal: Comparative Example 2), and 20 parts by mass of potassium hydroxide (14 parts by mass in terms of the alkali metal: Comparative Example 3) were added.

### [Calcining]

The honeycomb formed bodies of Examples 1 to 7 and Comparative Examples 1 to 3 were calcined (degreased) in the atmosphere at about 400 degrees C for five hours to thereby obtain calcinated bodies.

### [Firing]

The calcinated bodies of Examples 1 to 6 and Comparative Examples 1 to 3 were fired in an argon atmosphere at about 1450 degrees C for two hours to thereby obtain porous honeycomb structures (silicon carbide sintered bodies). The calcinated body of Example 7 was fired in a nitrogen atmosphere at about 1450 degrees C for two hours to obtain a porous honeycomb structure (silicon nitride sintered body).

### [Evaluation]

As to the calcinated bodies of Examples 1 to 7, and Comparative Examples 1 to 3, (1) strengths of calcinated bodies, (2) states of the calcinated bodies, and (3) porosities of the porous honeycomb structures were evaluated by the following methods.

### (1) Strength of Calcinated Body

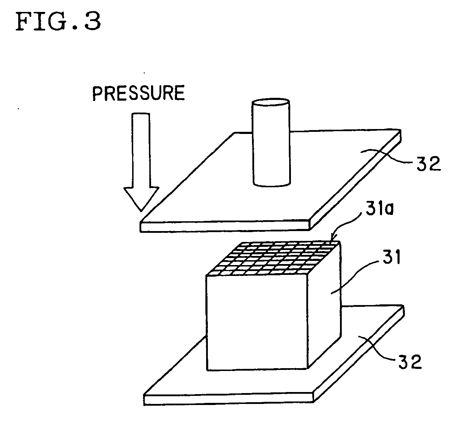

The strengths were measured according to "Compressive Strength Test Method of Fine Ceramics" described in JIS R 1608. Specifically, first, cubic bodies of honeycomb structures each having a side length of 35 mm, and having the same cell shape, partition wall thickness and cell density as in the respective Examples and Comparative examples were extruded using the clay prepared in Examples 1 to 7 and Comparative Examples 1 to 3. The bodies were dried and calcined by the same drying and calcinating methods as those of the respective examples and comparative examples to prepare test pieces. Subsequently, as shown in FIG. 3, pressure was applied to a test piece 31 via a pressurizing plate 32 in a cell 31a forming direction, compressive strength was measured, and accordingly strength of the calcinated body was evaluated. It is to be noted that the cubic body having the honeycomb structure was regarded as a solid cube, and a maximum load was divided by 35x35 (mm²) to calculate the compressive strength. Results are shown in Table 1.

### (2) State of Calcinated Body

The presence of cracks in the calcinated body, and the presence of collapse of the calcinated body by its own weight are visually observed to thereby evaluate a state of the calcinated body. Results are shown in Table 1.

### ③ Porosity of Porous Honeycomb Structure

Porosity of the porous honeycomb structure was measured by a mercury press-in method to thereby evaluate the porosity of the porous honeycomb structure. Results are shown in Table 1.

**(Table 1)**

| | Aggregate raw material | Alkali metal source | | | Strength of calcinated body (kg/cm²) | State of calcinated body | Porosity of porous honeycomb structure (%) |
|---|---|---|---|---|---|---|---|
| | | Type | Amount (parts by mass) | Alkali-metal converted amount (parts by mass) | | | |
| Example 1 | Silicon carbide/ metal silicon (80:20) | Potassium laurate | 0.45 | 0.07 | 0.06 | No crack·collapse | 60 |
| Example 2 | Silicon carbide/ metal silicon (80:20) | Potassium laurate | 0.15 | 0.02 | 0.01 | No crack·collapse | 60 |
| Example 3 | Silicon carbide/ metal silicon (80:20) | Potassium hydroxide | 0.05 | 0.03 | 0.02 | No crack·collapse | 60 |
| Example 4 | Silicon carbide/ metal silicon (80:20) | Sodium hydroxide | 0.05 | 0.03 | 0.02 | No crack·collapse | 60 |
| Example 5 | Silicon carbide/ metal silicon (80:20) | Potassium laurate | 0.9 | 0.15 | 0.12 | No crack·collapse | 60 |
| Example 6 | Silicon carbide/ metal silicon (80:20) | Potassium hydroxide | 10 | 7 | 8 | No crack·collapse | 58 |
| Example 7 | metal silicon | Potassium laurate | 0.45 | 0.07 | 0.05 | No crack·collapse | 60 |
| Comparative Example 1 | Silicon carbide/ metal silicon (80:20) | - | - | - | - | Collapsed | 60 |
| Comparative Example 2 | Silicon carbide/ metal silicon (80:20) | Potassium laurate | 0.03 | 0.005 | 0.005 | Cracked | 60 |
| Comparative Example 3 | Silicon carbide/ metal silicon (80:20) | Potassium hydroxide | 20 | 14 | 20 | No crack·collapse | 40 |

### [Results]

The calcinated bodies of Examples 1 to 7 had a strength of at least 0.01 kg/cm², and the strength was enhanced as compared with the calcinated body of Comparative Example 2. The generation of cracks or the collapse by their own weights were not recognized in any of the calcinated bodies of Examples 1 to 7. Further in the porous honeycomb structures of Examples 1 to 7, the porosity equal to that of the porous honeycomb structure of Comparative Example 1 was maintained, and the drop of the porosity was not recognized.

On the other hand, the calcinated body of Comparative Example 1 could not be inhibited from being collapsed by its own weight. The calcinated body of Comparative Example 2 had a strength of only 0.005 kg/cm², and any crack could not be inhibited. On the other hand, the calcinated body of Comparative Example 3 had a strength of 20.0 kg/cm², the strength was remarkably enhanced as compared with that of Comparative Example 1, and the generation of cracks or the collapse by its own weight was not recognized. However, in the porous honeycomb structure of Comparative Example 3, the porosity remarkably dropped as compared with that of Comparative Example 1. That is, a porous honeycomb structure having a targeted high porosity (porosity of 60%) could not be obtained.

### Industrial Applicability

As described above, in a method for manufacturing a porous honeycomb structure of the present invention, clay to be formed contains an alkali metal source. Therefore, when a formed body is fired, it is possible to effectively inhibit a situation in which cracks are generated in the porous honeycomb structure, or a situation in which the porous honeycomb structure collapses by its own weight

## Claims

1. A method for manufacturing a porous honeycomb structure, comprising the steps of:
mixing and kneading at least an aggregate raw material, water, an organic binder, a pore-forming agent and an alkali metal source to obtain a formable material, the aggregate raw material comprising metal silicon and/or a non-oxide ceramic containing silicon;
forming the formable material into a honeycomb shape having a plurality of cells as passages for fluid, followed by drying to obtain a honeycomb formed body;
calcinating the honeycomb formed body to obtain a calcinated body; and
firing the calcinated body to obtain the porous honeycomb structure;
wherein the formable material contains 0.01 to 10 parts by mass of the alkali metal source in terms of alkali metal with respect to 100 parts by mass of the aggregate raw material; **characterised in that** said alkali metal source is potassium hydroxide or sodium hydroxide.

2. The method for manufacturing the porous honeycomb structure according to claim 1, wherein the aggregate raw material contains at least one component selected from the group consisting of silicon carbide, silicon nitride, and metal silicon; and a total mass of the component(s) is 50% by mass or more of a total mass of the aggregate raw material.

3. A honeycomb formed body comprising shaped formable material containing at least an aggregate raw material, water, an organic binder, a pore-forming agent and an alkali metal source, the aggregate raw material comprising metal silicon and/or a non-oxide ceramic containing silicon, the honeycomb formed body having a plurality of cells as passages for fluid;
wherein the formable material contains 0.01 to 10 parts by mass of the alkali metal source in terms of alkali metal with respect to 100 parts by mass of the aggregate raw material; **characterised in that** said alkali metal source is potassium hydroxide or sodium hydroxide.

4. The honeycomb formed body according to claim 3, wherein the aggregate raw material contains at least one component selected from the group consisting of silicon carbide, silicon nitride, and metal silicon, and a total mass of the component(s) is 50% by mass or more of a total mass of the aggregate raw material.

## Patentansprüche

1. Verfahren zur Herstellung einer porösen Wabenstruktur, umfassend die folgenden Schritte:
das Mischen und Kneten von zumindest einem aggregierten Rohmaterial, Wasser, einem organischen Bindemittel, einem Porenbildner und einer Alkalimetallquelle, um ein formbares Material zu erhalten, wobei das aggregierte Rohmaterial metallisches Silicium und/oder nichtoxidkeramikhältiges Silicium umfasst;
das Formen des formbaren Materials zu einer Wabenform, die eine Vielzahl von Zellen als Durchgänge für Fluid aufweist, und anschließendes Trocknen, um einen Wabenformkörper zu erhalten;
das Calcinieren des Wabenformkörpers, um einen calcinierten Körper zu erhalten; und
das Brennen des calcinierten Körpers, um die poröse Wabenstruktur zu erhalten;
worin das formbare Material 0,01 bis 10 Massenteile der Alkalimetallquelle, berechnet als Alkalimetall, bezogen auf 100 Massenteile des aggregierten Rohmaterials, enthält;
**dadurch gekennzeichnet, dass** die Alkalimetallquelle Kaliumhydroxid oder Natriumhydroxid ist.

2. Verfahren zur Herstellung einer porösen Wabenstruktur nach Anspruch 1, worin das aggregierte Rohmaterial zumindest eine aus der aus Silciumcarbid, Siliciumnitrid und metallischem Silicium bestehenden Gruppe ausgewählte Komponente enthält; und die Gesamtmasse der Komponente(n) 50 Massen-% oder mehr der Gesamtmasse des aggregierten Rohmaterials beträgt.

3. Wabenformkörper, umfassend ein geformtes formbares Material, das zumindest ein aggregiertes Rohmaterial, ein organisches Bindemittel, einen Porenbildner und eine Alkalimetallquelle enthält, wobei das aggregierte Rohmaterial metallisches Silicium und/oder nichtoxidkeramikhältiges Silicium umfasst, wobei der Wabenformkörper eine Vielzahl von Zellen als Durchgänge für Fluid aufweist;
worin das formbare Material 0,01 bis 10 Massenteile der Alkalimetallquelle, berechnet als Alkalimetall, bezogen auf 100 Massenteile des aggregierten Rohmaterials, enthält;
**dadurch gekennzeichnet, dass** die Alkalimetallquelle Kaliumhydroxid oder Natriumhydroxid ist.

4. Wabenformkörper nach Anspruch 3, worin das aggregierte Rohmaterial zumindest eine aus der aus Silciumcarbid, Siliciumnitrid und metallischem Silicium bestehenden Gruppe ausgewählte Komponente enthält; und die Gesamtmasse der Komponente(n) 50 Massen-% oder mehr der Gesamtmasse des aggregierten Rohmaterials beträgt.

## Revendications

1. Procédé de fabrication d'une structure poreuse en nid d'abeilles, comprenant les étapes consistant à :
mélanger et malaxer au moins une matière première d'agrégat, de l'eau, un liant organique, un agent gélifiant et une source de métal alcalin pour obtenir une matière formable, la matière première d'agrégat comprenant du silicium métallique et/ou du silicium contenant de la céramique non oxyde ; former la matière formable en une forme de nid d'abeilles comprenant une pluralité de cellules comme passages pour un fluide, puis réaliser un séchage pour obtenir un corps formé en nid d'abeilles ;
calciner le corps formé en nid d'abeilles pour obtenir un corps calciné ; et
chauffer le corps calciné pour obtenir la structure poreuse en nid d'abeilles ;
dans lequel la matière formable contient 0,01 à 10 parties en masse de la source de métal alcalin en termes de métal alcalin par rapport à 100 parties en masse de la matière première d'agrégat ; **caractérisé en ce que** ladite source de métal alcalin est de l'hydroxyde de potassium ou de l'hydroxyde de sodium.

2. Procédé de fabrication de la structure poreuse en nid d'abeilles selon la revendication 1, dans lequel la matière première d'agrégat contient au moins un composant choisi dans le groupe constitué du carbure de silicium, du nitrure de silicium et du silicium métallique ; et une masse totale du (des) composant (s) est de 50 % en masse ou plus d'une masse totale de la matière première d'agrégat.

3. Corps formé en nid d'abeilles comprenant une matière formable formée contenant au moins une matière première d'agrégat, de l'eau, un liant organique, un agent gélifiant et une source de métal alcalin, la matière première d'agrégat comprenant du silicium métallique et/ou du silicium contenant de la céramique non oxyde, le corps formé en nid d'abeilles comprenant une pluralité de cellules comme passages pour un fluide ;
où la matière formable contient 0,01 à 10 parties en masse de la source de métal alcalin en termes de métal alcalin par rapport à 100 parties en masse de la matière première d'agrégat ; **caractérisé en ce que** ladite source de métal alcalin est de l'hydroxyde de potassium ou de l'hydroxyde de sodium.

4. Corps formé en nid d'abeilles selon la revendication 3, dans lequel la matière première d'agrégat contient au moins un composant choisi dans le groupe constitué du carbure de silicium, du nitrure de silicium et du silicium métallique, et une masse totale du (des) composant(s) est de 50 % en masse ou plus d'une masse totale de la matière première d'agrégat.
